# FASCICULE DE BREVET EUROPEEN

(11) **EP 3 174 925 B1**
(45) Date de publication et mention de la délivrance du brevet: **07.09.2022**
(21) Numéro de dépôt: 15750656.9
(22) Date de dépôt: 29.07.2015
(51) Int. Cl.: C08K 5/09, C08K 5/16, C08L 95/00

(54) **GRANULES DE BITUME ROUTIER**
STRASSENASPHALTGRANULAT
ROAD BITUMEN GRANULES

(30) Priorité: 01.08.2014 FR 1457538
(43) Date de publication de la demande: 07.06.2017
(73) Titulaire: TotalEnergies OneTech, 92400 Courbevoie (FR)
(72) Inventeur: MARIOTTI, Sophie, 69005 Lyon (FR); VINCENT, Régis, 69520 Grigny (FR)
(74) Mandataire: Corizzi, Valérie
(86) Numéro de dépôt international: PCT/EP2015/067407
(87) Numéro de publication internationale: WO 2016/016318

(56) Documents cités:
- WO-A1-2014/005935
- CA-A1- 2 178 053
- DE-A1- 2 438 330
- FR-A1- 2 998 896
- US-A- 2 387 514
- US-A- 3 026 568
- US-A- 4 769 288
- Jacques Connan ET AL: "Archaeological Bitumen: Indentification, Origins and Uses of an Ancient Near Eastern Material", Mat. Res. Soc. Symp. Proc., Vol. 267, 1992 Materials Research Society, 1 janvier 1992 (1992-01-01), pages 1-38, XP055074659, Extrait de l'Internet: URL:http:// [extrait le 2013-08-09]
- Lucy Cramp ET AL: "Molecules from the past, Archaeology meets chemistry", Catalyst, 1 février 2010 (2010-02-01), pages 1-4, XP055074661, Extrait de l'Internet: URL:http://www.catalyststudent.org.uk/dl/d 9a28a19d5607b9275ba9bd3c721270f7c0a2733/53 -catalyst_20_3_444.pdf [extrait le 2013-08-09]

## Description

### DOMAINE TECHNIQUE

La présente invention a pour objet des granules de bitume routier. La présente invention concerne également un procédé de transport et/ou de stockage de bitume routier à froid sous forme de granules, l'utilisation des granules selon l'invention comme liant routier, leur utilisation pour la fabrication d'enrobés ainsi qu'un procédé de fabrication d'enrobés à partir de granules de bitume selon l'invention.

### ETAT DE L'ART

La grande majorité du bitume est utilisée en construction, principalement pour la fabrication de chaussées routières ou dans l'industrie, par exemple pour des applications de toiture. Il se présente généralement sous la forme d'un matériau noir fortement visqueux, voire solide à température ambiante, qui se fluidifie en chauffant. De manière générale, le bitume est stocké et transporté à chaud, en vrac, dans des camions-citernes ou par bateaux à des températures élevées de l'ordre de 120°C à 160°C. Or, le stockage et le transport du bitume à chaud présente certains inconvénients. D'une part, le transport du bitume à chaud sous forme liquide est considéré comme dangereux et il est très encadré d'un point de vue réglementaire. Ce mode de transport ne présente pas de difficultés particulières lorsque les équipements et les infrastructures de transport sont en bon état. Dans le cas contraire, il peut devenir problématique : si le camion-citerne n'est pas suffisamment calorifugé, le bitume pourra devenir visqueux durant un trajet trop long. Les distances de livraison du bitume sont donc limitées. D'autre part, le maintien du bitume à des températures élevées dans les cuves ou dans les camions-citernes consomme de l'énergie. En outre, le maintien du bitume à des températures élevées pendant une longue période peut affecter les propriétés du bitume et ainsi changer les performances finales de l'enrobé.

Pour pallier les problèmes du transport et de stockage du bitume à chaud, des solutions de transport et de stockage en conditionnement à froid ont été développées. Ce mode de transport du bitume en conditionnement à froid ne représente qu'une fraction minime des quantités transportées dans le monde, mais il correspond à des besoins bien réels pour les régions géographiques d'accès difficile et coûteux par les moyens de transport traditionnels.

A titre d'exemple de transport à froid utilisé actuellement, on peut citer le transport du bitume à température ambiante dans des fûts métalliques. Ce moyen est de plus en plus contestable d'un point de vue environnemental car le bitume froid stocké dans les fûts doit être réchauffé avant son utilisation comme liant routier. Or, cette opération est difficile à mettre en œuvre pour ce type de conditionnement et les fûts constituent un déchet après utilisation. D'autre part, le stockage du bitume à froid dans des fûts conduit à des pertes car le bitume est très visqueux et une partie du produit reste sur les parois du fût lors du transvasement dans les cuves des unités de production des enrobés. Quant à la manipulation et au transport de produits bitumineux dans ces fûts, ils peuvent s'avérer difficiles et dangereux si l'équipement spécialisé de manutention des fûts n'est pas disponible chez les transporteurs ou sur le lieu d'utilisation du bitume.

A titre d'autres exemples, on peut citer les bitumes sous forme de granules transportées dans des sacs. Ces granules présentent l'avantage d'être facilement manipulables. Le brevet US 3 026 568 décrit des granules de bitume recouvertes d'un matériau poudreux, tel que de la poudre de calcaire. Néanmoins, les granules de bitume ont tendance à adhérer entre elles et s'agglomérer lors de leur stockage et/ou leur transport, notamment à des températures ambiantes élevées et durant de longues périodes.

Il existe un besoin de trouver un bitume routier transportable et/ou stockable à froid permettant de remédier aux inconvénients de l'art antérieur.

En particulier, le but de la présente invention est de fournir un bitume routier transportable et/ou stockable à des températures ambiantes élevées, notamment à une température inférieure à 100°C, de préférence entre 20°C et 90°C.

Un autre objectif de l'invention est de proposer un bitume routier facilement manipulable, notamment à des températures ambiantes élevées, en particulier à une température inférieure à 100°C, de préférence entre 20°C et 90°C.

Un autre objectif de l'invention est de proposer un procédé écologique et économique pour transporter le bitume routier et éviter l'utilisation de moyens supplémentaires pour le maintien en température dudit bitume lors du transport et/ou du stockage.

Un autre objectif de l'invention est de proposer un procédé de transport et/ou de stockage à froid amélioré.

Un autre objectif de l'invention est de proposer un procédé écologique permettant de minimiser la présence de déchets et/ou de résidus.

### OBJET DE L'INVENTION

L'objet de l'invention concerne des granules de bitume comprenant au moins une base bitume ayant une pénétrabilité, mesurée à 25°C selon la norme EN 1426, comprise entre 5 et 300 1/10 mm, et de 0,1% à 5% en masse par rapport à la masse totale desdites granules d'au moins un additif chimique choisi parmi :
- un composé de formule générale : HOOC-C_{w}H_{2w}-COOH dans laquelle w est un entier variant de 4 à 22, et
- un composé de formule générale (**II**) : R-CONH--NHCO-R' dans laquelle:
   - R et R', identiques ou différents, contiennent une chaîne hydrocarbonée, saturée ou insaturée, linéaire ou ramifiée, cyclique ou acyclique, ayant de 1 à 22 atomes de carbone et comprenant éventuellement des hétéroatomes et/ou des cycles ayant de 3 à 12 atomes et/ou des hétérocycles ayant de 3 à 12 atomes;

Selon un mode de réalisation particulier préférentiel, le composé est un diacide de formule générale HOOC-C_{w}H_{2w}-COOH dans laquelle w est un entier variant de 4 à 22, de préférence de 4 à 12.

Avantageusement, le composé est un diacide choisi parmi le groupe constitué par l'acide adipique, l'acide pimélique, l'acide subérique, l'acide azélaique, l'acide sébacique, l'acide undécanedioïque, l'acide 1,12-dodécanedioïque et l'acide tétradécanedioïque.

Selon un mode de réalisation particulier, l'additif chimique est un composé de formule générale (**II**) : R-CONH-NHCO-R' dans laquelle :
- R et R', identiques ou différents, contiennent une chaîne hydrocarbonée, saturée ou insaturée, linéaire ou ramifiée, cyclique ou acyclique, ayant de 1 à 22 atomes de carbone, comprenant éventuellement des hétéroatomes et/ou des cycles ayant de 3 à 12 atomes et/ou des hétérocycles ayant de 3 à 12 atomes;

Avantageusement, les groupements R et/ou R', identiques ou différents, comprennent un ou plusieurs cycles ou hétérocycles mono- ou polycycliques aromatiques éventuellement substitués par une ou plusieurs fonctions hydroxyle et/ou une ou plusieurs chaînes hydrocarbonées saturées, linéaires ou ramifiées, ayant de 1 à 6 atomes de carbone.

Selon un mode de réalisation particulier préférentiel, les groupements R et/ou R', identiques ou différents, comprennent une chaîne hydrocarbonée aliphatique de 4 à 22 atomes de carbone, notamment choisie parmi les groupements C₄H₉, C₅H₁₁, C₉H₁₉, C₁₁H₂₃, C₁₂H₂₅, C₁₇H₃₅, C₁₈H₃₇, C₂₁H₄₃, C₂₂H₄₅.

Selon un mode de réalisation particulier, les granules de bitume comprennent de 0,1% à 5% en masse, de préférence de 0,5% à 4% en masse, plus préférentiellement de 0,5% à 2,5% en masse d'additif chimique par rapport à la masse totale desdites granules.

Selon un mode de réalisation particulier, les granules comprennent en outre au moins un adjuvant polymère oléfinique fonctionnalisé par au moins des groupements fonctionnels glycidyle.

Selon un mode de réalisation particulier préférentiel, l'adjuvant polymère oléfinique est choisi dans le groupe consistant en :
(a) les copolymères, statistiques ou séquencés, d'éthylène et d'un monomère choisi parmi l'acrylate de glycidyle et le méthacrylate de glycidyle, comprenant de 50% à 99,7% en masse d'éthylène;
(b) les terpolymères, statistiques ou séquencés, d'éthylène, d'un monomère A choisi parmi l'acétate de vinyle et les acrylates ou méthacrylates d'alkyle en C₁ à C₆ et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène ; et
(c) les copolymères résultant du greffage d'un monomère B choisi parmi l'acrylate de glycidyle et le méthacrylate de glycidyle, sur un substrat consistant en un polymère choisi parmi les polyéthylènes, les polypropylènes, les copolymères statistiques ou séquencés d'éthylène et d'acétate de vinyle et les copolymère statistiques ou séquencés d'éthylène et d'acrylate ou méthacrylate d'alkyle en C₁ à C₆, comprenant de 40% à 99,7% en masse d'éthylène, lesdits copolymères greffés comprenant de 0,5% à 15% en masse de motifs greffés issus du monomère B.

Selon un mode de réalisation particulier préférentiel, l'adjuvant polymère oléfinique est choisi parmi les terpolymères (b).

Avantageusement, l'adjuvant polymère oléfinique est choisi parmi les terpolymères statistiques.

Selon un mode de réalisation particulier, les granules comprennent de 0,05% à 15% en masse, de préférence de 0,1% à 10% en masse, plus préférentiellement de 0,5% à 5% en masse de l'adjuvant polymère oléfinique par rapport à la masse totale desdites granules.

Selon un mode de réalisation particulier, les granules comprennent en outre au moins un anti-agglomérant de préférence d'origine minérale ou organique.

De préférence, l'anti-agglomérant est choisi parmi le talc ; les fines généralement de diamètre inférieur à 125 µm à l'exception des fines calcaires, telles que les fines siliceuses ; le sable tel que le sable de fontainebleau ; le ciment ; le carbone ; les résidus du bois tels que la lignine, la lignosulfonate, les poudres d'aiguilles de conifères, les poudres de cônes de conifères, notamment de pin ; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les oxydes de silicium ; la poudre de matière plastique ; la chaux ; le plâtre ; la poudre de caoutchouc ; la poudre de polymères tels que les copolymères styrène-butadiène (SB), les copolymères styrène-butadiène-styrène (SBS) ; et leurs mélanges.

Avantageusement, l'anti-agglomérant est choisi parmi le talc ; les fines généralement de diamètre inférieur à 125 µm à l'exception des fines calcaires, telles que les fines siliceuses ; les résidus du bois tels que la lignine, la lignosulfonate, les poudres d'aiguilles de conifères, les poudres de cônes de conifères, notamment de pin; la poudre de verre ; le sable tel que le sable de fontainebleau ; et leurs mélanges.

Selon un mode de réalisation particulier, les granules sont recouvertes sur au moins une partie de leur surface d'un anti-agglomérant de préférence d'origine minérale ou organique.

De préférence, l'anti-agglomérant est choisi parmi le talc ; les fines généralement de diamètre inférieur à 125 µm à l'exception des fines calcaires, telles que les fines siliceuses ; le sable tel que le sable de fontainebleau ; le ciment ; le carbone ; les résidus du bois tels que la lignine, la lignosulfonate, les poudres d'aiguilles de conifères, les poudres de cônes de conifères, notamment de pin ; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les oxydes de silicium ; la poudre de matière plastique ; la chaux ; le plâtre ; la poudre de caoutchouc ; la poudre de polymères tels que les copolymères styrène-butadiène (SB), les copolymères styrène-butadiène-styrène (SBS) ; et leurs mélanges.

Avantageusement, l'anti-agglomérant est choisi parmi le talc ; les fines généralement de diamètre inférieur à 125 µm à l'exception des fines calcaires, telles que les fines siliceuses ; les résidus du bois tels que la lignine, la lignosulfonate, les poudres d'aiguilles de conifères, les poudres de cônes de conifères, notamment de pin; la poudre de verre ; le sable tel que le sable de fontainebleau ; et leurs mélanges.

Selon un mode de réalisation particulier préférentiel, l'anti-agglomérant est le talc.

Un autre objet de l'invention concerne également un procédé de transport et/ou de stockage de bitume routier à froid, ledit procédé comprenant la mise en forme à partir du bitume routier de granules de bitume telles que décrites précédemment, puis le transport et/ou le stockage sous forme des granules de bitume.

On entend par bitume routier, les compositions bitumineuses constituées d'une ou de plusieurs bases bitumes et comprenant un ou plusieurs additifs chimiques, lesdites compositions étant destinées à une application routière.

On entend également par bitume routier, les compositions bitumineuses comprenant une ou plusieurs bases bitumes, un ou plusieurs additifs chimiques et un ou plusieurs antiagglomérants, lesdites compositions chimiques étant destinées à une application routière.

On entend par granule de bitume, les granules de bitume formées à partir de bitume routier selon l'invention.

Selon un mode de réalisation particulier, le bitume routier est transporté et/ou stocké à une température inférieure à 100°C, de préférence à une température ambiante inférieure à 100°C. En particulier, la température de transport et/ou de stockage correspond à la température ambiante. On entend par température ambiante, la température qui est atteinte lors du transport et/ou du stockage du bitume selon l'invention sans que ledit bitume soit chauffé par tout type de procédé. Ainsi, la température ambiante peut atteindre des températures élevées, inférieure à 100°C durant les périodes estivales, en particulier dans les régions géographiques à climat chaud.

Selon un mode de réalisation particulier préférentiel, le bitume routier est transporté et/ou stocké à une température ambiante comprise entre 20°C et 90°C, de préférence comprise entre 20°C et 80°C, plus préférentiellement comprise entre 40°C et 80°C, encore plus préférentiellement comprise entre 50°C et 70°C, encore plus préférentiellement comprise entre 40°C et 60°C.

Un autre objet de l'invention concerne également l'utilisation de granules de bitume comme liant routier, lesdites granules de bitume étant telles que décrites précédemment.

Selon un mode de réalisation particulier, les granules de bitume sont utilisées pour la fabrication d'enrobés, lesdits granules étant tels que décrits précédemment.

Un autre objet de l'invention concerne également un procédé de fabrication d'enrobés comprenant au moins un liant routier et des granulats, le liant routier étant choisi parmi les granules de bitume selon l'invention, ce procédé comprenant au moins les étapes de :
- chauffage des granulats à une température allant de 100°C à 180°C, de préférence de 120°C à 160°C,
- mélange des granulats avec le liant routier dans une cuve telle qu'un malaxeur ou un tambour malaxeur,
- obtention d'enrobés.

Selon un mode de réalisation particulier, le procédé de fabrication d'enrobés ne comporte pas d'étape de chauffage du liant routier avant son mélange avec les granulats.

### DESCRIPTION DETAILLEE

Selon un mode de réalisation particulier, les granules de bitume sont préparées à partir de bitume routier, ledit bitume routier étant préparé en mettant en contact :
- une ou plusieurs bases bitumes, et
- entre 0,1% et 5% en masse, de préférence entre 0,5% et 4% en masse, plus préférentiellement entre 0,5% et 2,5% en masse d'un additif chimique.

Dans la suite de la description, les pourcentages massiques sont calculés par rapport à la masse totale du bitume routier.

On opère à des températures de fabrication comprises entre 100°C et 200°C, de préférence entre 140°C et 200°C, plus préférentiellement entre 140°C et 170°C, et sous agitation pendant une durée d'au moins 10 minutes, de préférence comprise entre 30 minutes et 10 heures, plus préférentiellement entre 1 heure et 6 heures. On entend par température de fabrication, la température de chauffage de la ou des bases bitumes avant mélange ainsi que la température de mélange. La température et la durée du chauffage varient selon la quantité de bitume utilisée et sont définies par la norme NF EN 12594.

Parmi les bases bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bases bitumes selon l'invention sont avantageusement choisies parmi les bases bitumes provenant du raffinage du pétrole brut. Les bases bitumes peuvent être choisies parmi les bases bitumes ou mélange de bases bitumes provenant du raffinage du pétrole brut, en particulier des bases bitumes contenant des asphaltènes. Les bases bitumes peuvent être obtenues par des procédés conventionnels de fabrication des bases bitumes en raffinerie, en particulier par distillation directe et/ou distillation sous vide du pétrole. Ces bases bitumes peuvent être éventuellement viscoréduites et/ou désasphaltées et/ou rectifiées à l'air. Les différentes bases bitumes obtenues par les procédés de raffinage peuvent être combinées entre elles pour obtenir le meilleur compromis technique. La base bitume peut aussi être une base bitume de recyclage. Les bases bitumes peuvent être des bases bitumes de grade dur ou de grade mou. Les bases bitumes ont une pénétrabilité, mesurée à 25°C selon la norme EN 1426, comprise entre 5 et 300 1/10 mm, de préférence entre 10 et 100 1/10 mm, plus préférentiellement entre 30 et 100 1/10 mm.

Selon un mode de réalisation particulier, l'additif chimique peut être un composé de formule générale.

HOOC-C_{w}H_{2w}-COOH où w est un entier variant de 4 à 22, de préférence de 4 à 12.

Les diacides préférés sont les suivants :
- l'acide adipique ou acide 1,6-hexanedioïque avec w = 4
- l'acide pimélique ou acide 1,7-heptanedioïque avec w = 5
- l'acide subérique ou acide 1,8-octanedioïque avec w = 6
- l'acide azélaique ou acide 1,9-nonanedioïque avec w = 7
- l'acide sébacique ou acide 1,10-decanedioïque avec w = 8
- l'acide undécanedioïque avec w = 9
- l'acide 1,12-dodécanedioïque avec w = 10
- l'acide tétradécanedioïque avec w = 12

Avantageusement, le diacide est l'acide sébacique.

Les diacides peuvent aussi être des dimères diacide d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacide d'acide(s) gras insaturé(s) sont classiquement obtenus par réaction de dimérisation intermoléculaire d'au moins un acide gras insaturé (réaction de Diels Alder par exemple). De préférence, on dimérise un seul type d'acide gras insaturé. Ils dérivent en particulier de la dimérisation d'un acide gras insaturé notamment en C₈ à C₃₄, notamment en C₁₂ à C₂₂, en particulier en C₁₆ à C₂₀, et plus particulièrement en C₁₈. Un dimère d'acide gras préféré est obtenu par dimérisation de l'acide linoléïque, celui-ci pouvant ensuite être partiellement ou totalement hydrogéné. Un autre dimère d'acide gras préféré a pour formule HOOC-(CH₂)₇-CH=CH-(CH₂)₇-COOH. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

Selon un autre mode de réalisation particulier, l'additif chimique peut être un composé de formule générale (**II**) suivante :

RCONH-NHCO-R'

dans laquelle:
- R et R', identiques ou différents, contiennent une chaîne hydrocarbonée, saturée ou insaturée, linéaire ou ramifiée, cyclique ou acyclique, ayant de 1 à 22 atomes de carbone et comprenant éventuellement des hétéroatomes et/ou des cycles ayant de 3 à 12 atomes et/ou des hétérocycles ayant de 3 à 12 atomes;

De préférence, les groupements R et/ou R', identiques ou différents, sont des chaînes hydrocarbonées linéaires, saturées comprenant de 4 à 22 atomes de carbone. Parmi les chaînes hydrocarbonées linéaires, saturées préférées, on peut citer les groupements C₄H₉, C₅H₁₁, C₉H₁₉, C₁₁H₂₃, C₁₂H₂₅, C₁₇H₃₅, C₁₈H₃₇, C₂₁H₄₃, C₂₂H₄₅.

Parmi les composés préférés selon l'invention, on peut citer les dérivés hydrazides répondant aux formules suivantes:

C₅H₁₁-CONH-NHCO-C₅H₁₁

C₉H₁₉-CONH-NHCO-C₉H₁₉

C₁₁H₂₃-CONH-NHCO-C₁₁H₂₃

C₁₇H₃₅-CONH-NHCO-C_{I7}H₃₅

C₂₁H₄₃-CONH-NHCO-C₂₁H_{43.}

On peut également citer comme dérivé hydrazide, le 2',3-bis[[3-[3,5-di-tert-butyl-4-hydroxyphenyl]propionyl]] propionohydrazide,

Selon un mode de réalisation particulier, les granules de bitume comprennent de 0,1% à 5% en masse, de préférence de 0,5% à 4% en masse, plus préférentiellement de 0,5% à 2,5% en masse de l'additif chimique par rapport à la masse totale desdites granules.

Selon un autre mode de réalisation particulier, les granules sont préparées à partir d'un bitume routier, ledit bitume routier étant préparé en mettant en contact :
- une ou plusieurs bases bitume,
- entre 0,1% et 5% en masse, de préférence entre 0,5% et 4% en masse, plus préférentiellement entre 0,5% et 2,5% en masse d'un additif chimique,
- et entre 0,05% et 15% en masse, de préférence entre 0,1% et 10% en masse, plus préférentiellement entre 0,5% et 6% en masse d'un adjuvant polymère oléfinique.

La base bitume et l'additif chimique sont tels que décrits ci-dessus.

L'adjuvant polymère oléfinique est choisi, de préférence, dans le groupe consistant en (a) les copolymères éthylène/(méth)acrylate de glycidyle ; (b) les terpolymères éthylène/monomère A/monomère B et (c) les copolymères résultant du greffage d'un monomère B sur un substrat polymère.
(a) Les copolymères éthylène/(méth)acrylate de glycidyle sont, avantageusement, choisis parmi les copolymères statistiques ou séquencés, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement 60% à 90% en masse d'éthylène.
(b) Les terpolymères sont, avantageusement, choisis parmi les terpolymères statistiques ou séquencés, de préférence statistiques, d'éthylène, d'un monomère A et d'un monomère B.

Le monomère A est choisi parmi l'acétate de vinyle et les acrylates ou méthacrylates d'alkyle en C₁ à C₆.

Le monomère B est choisi parmi l'acrylate de glycidyle et le méthacrylate de glycidyle.

Les terpolymères éthylène/monomère A/monomère B comprennent de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène. (c) Les copolymères résultent du greffage d'un monomère B choisi parmi l'acrylate de glycidyle et le méthacrylate de glycidyle, sur un substrat polymère. Le substrat polymère consiste en un polymère choisi parmi les polyéthylènes, notamment les polyéthylènes basse densité, les polypropylènes, les copolymères statistiques ou séquencés, de préférence statistiques, d'éthylène et d'acétate de vinyle et les copolymère statistiques ou séquencés, de préférence statistiques, d'éthylène et d'acrylate ou méthacrylate d'alkyle en C₁ à C₆, comprenant de 40% à 99,7% en masse, de préférence de 50% à 99% en masse d'éthylène. Lesdits copolymères greffés comprennent de 0,5% à 15% en masse, de préférence de 2,5% à 15% en masse de motifs greffés issus du monomère B.

L'adjuvant polymère oléfinique est, de préférence, choisi parmi les terpolymères (b) éthylène/monomère A/monomère B décrit ci-dessus.

Avantageusement, l'adjuvant polymère oléfinique est choisi parmi les terpolymères statistiques d'éthylène, d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

Selon un mode de réalisation particulier, les granules de bitume comprennent de 0,05% à 15% en masse, de préférence de 0,1% à 10% en masse, plus préférentiellement de 0,5% à 6% en masse de l'adjuvant polymère oléfinique par rapport à la masse totale desdites granules.

Les quantités de l'additif chimique et, éventuellement, de l'adjuvant polymère oléfinique sont ajustées en fonction de la nature de la ou des bases bitumes utilisées. En particulier, la pénétrabilité visée pour les granules de bitume est de préférence comprise entre 20 et 45 1/10mm et/ou la température de ramollissement bille et anneau (TBA) visée est, de préférence, supérieure à 90°C, étant entendu que la pénétrabilité est mesurée à 25°C selon la norme EN 1426 et la TBA selon la norme EN 1427.

Selon un mode de réalisation particulier préféré, le bitume routier comprend une combinaison de l'additif chimique de formule **(II)** et l'adjuvant polymère oléfinique décrits ci-dessus.

On préférera également la combinaison dans laquelle l'adjuvant polymère oléfinique est choisi parmi les terpolymères (b) éthylène/monomère A/monomère B décrits ci-dessus.

Plus préférentiellement, le bitume routier comprend l'additif chimique de formule (**II**) et l'adjuvant polymère oléfinique choisi parmi les terpolymères (b) éthylène/monomère A/monomère B décrits ci-dessus.

Selon un mode de réalisation de l'invention, les granules de bitume comprennent en outre au moins un anti-agglomérant, de préférence d'origine minérale ou organique.

De préférence, l'anti-agglomérant est choisi parmi le talc ; les fines généralement de diamètre inférieur à 125 µm à l'exception des fines calcaires, telles que les fines siliceuses ; le sable tel que le sable de fontainebleau ; le ciment ; le carbone ; les résidus du bois tels que la lignine, la lignosulfonate, les poudres d'aiguilles de conifères, les poudres de cônes de conifères, notamment de pin ; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les oxydes de silicium ; la poudre de matière plastique ; la chaux ; le plâtre ; la poudre de caoutchouc ; la poudre de polymères tels que les copolymères styrène-butadiène (SB), les copolymères styrène-butadiène-styrène (SBS) ; et leurs mélanges.

Avantageusement, l'anti-agglomérant est choisi parmi le talc ; les fines généralement de diamètre inférieur à 125 µm à l'exception des fines calcaires, telles que les fines siliceuses ; les résidus du bois tels que la lignine, la lignosulfonate, les poudres d'aiguilles de conifères, les poudres de cônes de conifères, notamment de pin; la poudre de verre ; le sable tel que le sable de fontainebleau ; et leurs mélanges.

De préférence, les granules de bitume comprennent en outre entre 0,5% et 20% en masse, de préférence entre 2% et 20% en masse, plus préférentiellement entre 4% et 15% en masse de l'anti-agglomérant par rapport à la masse totale de bitume desdites granules.

Dans ce mode de réalisation, les granules de bitume sont préparées à partir de bitume routier, ledit bitume routier étant préparé en mettant en contact :
- une ou plusieurs bases bitumes,
- entre 0,1% et 5% en masse, de préférence entre 0,5% et 4% en masse, plus préférentiellement entre 0,5% et 2,5% en masse d'un additif chimique par rapport à la masse totale de bitume desdites granules, et
- entre 0,5% et 20% en masse, de préférence entre 2% et 20% en masse, plus préférentiellement entre 4% et 15% en masse de l'anti-agglomérant par rapport à la masse totale de bitume desdites granules.

Le bitume routier tel que décrit ci-dessus peut également contenir d'autres additifs connus ou d'autres élastomères pour bitume connus tels que les copolymères SB (copolymère à blocs du styrène et du butadiène), SBS (copolymère à blocs styrène-butadiène-styrène), SIS (styrène-isoprène-styrène), SBS^{∗} (copolymère à blocs styrène-butadiène-styrène en étoile), SBR (styrène-b-butadiène-rubber), EPDM (éthylène propylène diène modifié). Ces élastomères peuvent en outre être réticulés selon tout procédé connu, par exemple avec du soufre. On peut également citer les élastomères réalisés à partir de monomères styrène et de monomères butadiène permettant une réticulation sans agent réticulant tels que décrits dans les documents WO2007/058994, WO2008/137394 et par la demanderesse dans la demande de brevet WO11/013073.

Selon un mode de réalisation particulier, le bitume routier est constitué uniquement d'une ou de plusieurs bases bitumes et d'un ou de plusieurs additifs chimiques tels que décrits ci-dessus.

Les granules de bitume sont obtenues par mise en forme de bitume routier tel que décrit ci-dessus selon tout procédé connu, par exemple selon le procédé de fabrication décrit dans le document US 3 026 568, le document WO 2009/153324 ou le document WO 2012/168380. Selon un mode de réalisation particulier, la mise en forme des granules peut être réalisée par égouttage, en particulier à l'aide d'un tambour.

D'autres techniques peuvent être utilisées dans le procédé de fabrication des granules de bitume, en particulier le moulage, l'extrusion...

Les granules de bitume selon l'invention peuvent avoir au sein d'une même population de granules, une ou plusieurs formes choisies parmi une forme cylindrique, sphérique ou ovoïde. Plus précisément, les granules de bitume selon l'invention ont de préférence une forme cylindrique ou sphérique.

Selon un mode de réalisation de l'invention, la taille des granules de bitume est telle que la dimension moyenne la plus longue est de préférence inférieure ou égale à 50 mm, plus préférentiellement de 3 à 30 mm, encore plus préférentiellement comprise de 5 à 20 mm.

De préférence, les granules de bitume selon l'invention présentent un poids compris entre 0,1 g et 50 g, de préférence entre 0,2 g et 10 g, plus préférentiellement entre 0,2 g et 5 g.

Selon un autre mode de réalisation de l'invention, la taille des granules de bitume est telle que la dimension moyenne la plus longue est de préférence inférieure à 20 mm, plus préférentiellement inférieure à 10 mm, encore plus préférentiellement inférieure à 5 mm. La taille des granules de bitume peut varier selon le procédé de fabrication employé. Par exemple, l'utilisation d'une filière permet de contrôler la fabrication de granules d'une taille choisie. Un tamisage permet de sélectionner des granules en fonction de leur taille.

Selon un mode de réalisation particulier, les granules de bitume sont recouvertes sur au moins une partie de leur surface d'un anti-agglomérant, de préférence sur l'ensemble de leur surface.

On entend par anti-agglomérant, tout composé qui limite l'agglomération et/ou l'adhésion des granules entre eux lors de leur transport et/ou de leur stockage à température ambiante et qui assure leur fluidité lors de leur manipulation.

De préférence, l'anti-agglomérant est choisi parmi le talc ; les fines généralement de diamètre inférieur à 125 µm à l'exception des fines calcaires, telles que les fines siliceuses ; le sable tel que le sable de fontainebleau ; le ciment ; le carbone ; les résidus du bois tels que la lignine, la lignosulfonate, les poudres d'aiguilles de conifères, les poudres de cônes de conifères, notamment de pin ; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les oxydes de silicium ; la poudre de matière plastique ; la chaux ; le plâtre ; la poudre de caoutchouc ; la poudre de polymères tels que les copolymères styrène-butadiène (SB), les copolymères styrène-butadiène-styrène (SBS) ; et leurs mélanges.

Avantageusement, l'anti-agglomérant est choisi parmi le talc ; les fines généralement de diamètre inférieur à 125 µm à l'exception des fines calcaires, telles que les fines siliceuses ; les résidus du bois tels que la lignine, la lignosulfonate, les poudres d'aiguilles de conifères, les poudres de cônes de conifères, notamment de pin; la poudre de verre ; le sable tel que le sable de fontainebleau ; et leurs mélanges.

Selon un mode de réalisation particulier préférentiel, l'anti-agglomérant est choisi le talc.

De préférence, la masse de l'anti-agglomérant recouvrant au moins une partie de la surface des granules est comprise entre 0,2% et 10% en masse, de préférence entre 0,5% et 8% en masse, plus préférentiellement entre 0,5% et 5% par rapport à la masse totale de bitume desdites granules.

Avantageusement, la masse de l'anti-agglomérant recouvrant au moins une partie de la surface des granules est d'environ 1% en masse par rapport à la masse totale de bitume desdites granules.

Selon un mode de réalisation de l'invention, l'anti-agglomérant compris dans le bitume routier formant les granules de bitume peut être identique ou différent de l'anti-agglomérant recouvrant au moins une partie de la surface desdites granules de bitume.

La couche d'anti-agglomérant recouvrant les granules de bitume selon l'invention est, de préférence, continue de façon à ce qu'au moins 90% de la surface de la granule de bitume est recouverte d'un anti-agglomérant, de préférence au moins 95%, plus préférentiellement au moins 99%. L'épaisseur moyenne de la couche d'anti-agglomérant est, de préférence, supérieure ou égale à 20 µm, plus préférentiellement comprise entre 20 et100 µm. La couche d'anti-agglomérant doit être suffisamment épaisse pour que celle-ci soit continue.

Les granules de bitume sont recouvertes de l'anti-agglomérant selon tout procédé connu, par exemple selon le procédé décrit dans le document US 3 026 568.

L'objet de l'invention concerne également un procédé de transport et/ou de stockage d'un bitume routier à froid, ledit bitume étant transporté et/ou stocké sous forme de granules de bitume telles que décrites ci-dessus.

On entend par transport et/ou stockage à froid, un transport et/ou un stockage à une température inférieure à 100°C, de préférence à une température ambiante inférieure à 100°C. La température est, de préférence, comprise entre 20°C et 90°C, de préférence comprise entre 20°C et 80°C, plus préférentiellement comprise entre 40°C et 80°C, encore plus préférentiellement comprise entre 50°C et 70°C, encore plus préférentiellement comprise entre 40°C et 60°C.

Les granules de bitume sont, de préférence, transportées et/ou du stockées en vrac dans des sacs de 1 kg à 30 kg ou de 500 kg à 1000 kg couramment appelés dans le domaine des bitumes routiers des « Big Bag », lesdits sacs étant de préférence en matériau thermofusible ou dans des cartons de 5 kg à 30 kg ou dans des fûts de 100 kg à 200 kg.

L'objet de l'invention concerne également l'utilisation de granules de bitume telles que décrites ci-dessus comme liant routier. Le liant routier peut être employé pour fabriquer des enrobés, en association avec des granulats selon tout procédé connu. Les enrobés bitumineux sont utilisés comme matériaux pour la construction et l'entretien des corps de chaussée et de leur revêtement, ainsi que pour la réalisation de tous travaux de voiries. On peut citer par exemple les enduits superficiels, les enrobés à chaud, les enrobés à froid, les enrobés coulés à froid, les graves émulsions, les couches de bases, de liaison, d'accrochage et de roulement, et d'autres associations d'un liant bitumineux et du granulat routier possédant des propriétés particulières, telles que les couches anti-orniérantes, les enrobés drainants, ou les asphaltes (mélange entre un liant bitumineux et des granulats du type du sable).

Un autre objet de l'invention concerne un procédé de fabrication d'enrobés comprenant au moins un liant routier et des granulats, le liant routier étant choisi parmi les granules de bitume selon l'invention, ce procédé comprenant au moins les étapes de :
- chauffage des granulats à une température allant de 100°C à180°C, de préférence de 120°C à 160°C,
- mélange des granulats avec le liant routier dans une cuve telle qu'un malaxeur ou un tambour malaxeur,
- obtention d'enrobés.

Selon un mode de réalisation particulier, le procédé de l'invention ne comporte pas d'étape de chauffage du liant routier avant son mélange avec les granulats.

Plus précisément, le procédé de fabrication d'enrobés selon l'invention ne requiert pas d'étape de chauffage des granules de bitume avant mélange avec les granulats chauffés car au contact des granulats chauds, les granules de bitume fondent.

Les granules de bitume selon l'invention présentent donc l'avantage de pouvoir être ajoutées directement aux granulats chauds, sans avoir à être fondues préalablement au mélange avec les granulats chauds.

De préférence, l'étape de mélange des granulats et du liant routier est réalisée sous agitation, puis l'agitation est maintenue pendant au plus 5 minutes, de préférence au plus 1 minute pour permettre l'obtention d'un mélange homogène.

Les granules de bitume selon la présente invention sont remarquables en ce qu'elles permettent le transport et/ou le stockage de bitume routier à froid dans des conditions optimales, en particulier sans qu'il y ait agglomération et/ou adhésion desdites granules entre elles lors de leur transport et/ou leur stockage, même lorsque la température ambiante est élevée et sans dégrader les propriétés dudit bitume routier pour une application routière.

Les différents modes de réalisation, variantes, les préférences et les avantages décrits ci-dessus pour chacun des objets de l'invention s'appliquent à tous les objets de l'invention et peuvent être pris séparément ou en combinaison.

L'invention est illustrée par les exemples suivants donnés à titre non limitatif.

### Exemples

Les caractéristiques rhéologiques et mécaniques des bitumes auxquelles on fait référence dans ces exemples sont mesurées de la façon indiquée dans le tableau 1.

**Tableau 1**

| **Propriété** | **Abréviation** | **Unité** | **Norme de mesure** |
|---|---|---|---|
| Pénétrabilité à l'aiguille à 25°C | P₂₅ | 1/10 mm | NF EN 1426 |
| Température de ramollissement bille et anneau | TBA | °C | NF EN 1427 |

### 1. Bitumes B₂,B_{3,} B₄, B₅, B₆, B₇, B₉ à B₁₅ et B₁₇ à B₂₃

Différents bitumes **B₂**, **B**_{**3**,} **B₄**, **B₅**, **B₆**, **B₇, B₉ à B₁₅** et **B₁₇** à **B₂₃** sont préparés à partir des produits suivants :
- une base bitume de grade 70/100, notée **B₀**, ayant une pénétrabilité P₂₅ de 69 1/10 mm et une TBA de 47,6°C et disponible commercialement auprès du groupe TOTAL sous la marque AZALT^{®} ;
- une base bitume de grade 35/50, notée **B₁**, ayant une pénétrabilité P₂₅ de 41 1/10 mm et une TBA de 52,6°C et disponible commercialement auprès du groupe TOTAL sous la marque AZALT^{®} ;
- une base bitume de grade 13/40 aux polymères réticulée, notée **B₈**, ayant une pénétrabilité P₂₅ de 47 1/10 mm et une TBA de 66,4°C, disponible commercialement auprès du groupe TOTAL sous la marque STYRELF^{®} ;
- une base bitume de grade 50/70, notée **B₁₆**, ayant une pénétrabilité P₂₅ de 58 1/10 mm et une TBA de 49,6 °C et disponible commercialement auprès du groupe TOTAL sous la marque AZALT^{®} ;
- un copolymère diséquencé styrène/butadiène, noté **SB,** ayant une quantité en masse de styrène de 30% par rapport à la masse du copolymère, disponible commercialement auprès de la société KRATON sous le nom D1184 A ;
- une cire Fischer-Tropsch disponible commercialement auprès de la société SASOL sous la marque **Sasobit**^{®} ;
- un additif chimique, le 2',3-bis[[3-[3,5-di-tert-butyl-4-hydroxyphenyl]propionyl]] propionohydrazide, noté **hydrazide;**
- un additif chimique, l'acide sébacique noté **acide;**
- une cire de poly(oxyde d'éthylène), notée **POE,** disponible commercialement auprès de la société Honeywell;
- un adjuvant polymère oléfinique consistant en un terpolymère éthylène/acrylate de butyle/méthacrylate de glycidyle, noté **E/AB/MG,** dans des proportions massiques, respectivement de 70/21/9 et possédant un indice de fusion MFR (acronyme anglais pour « Melt Flow Rate ») (190°C/2,16 kg) de 8g/10min, calculé selon la norme ASTM D1238-ISO1133. ;
- des fines siliceuses, noté **filler** ;
- de la lignine ;
- de la poudre de verre, noté **poudre;**
- du sable de fontainebleau, noté **sable.**

Les quantités en pourcentage massique utilisées pour chaque bitume sont indiquées dans le tableau 2 ci-dessous.

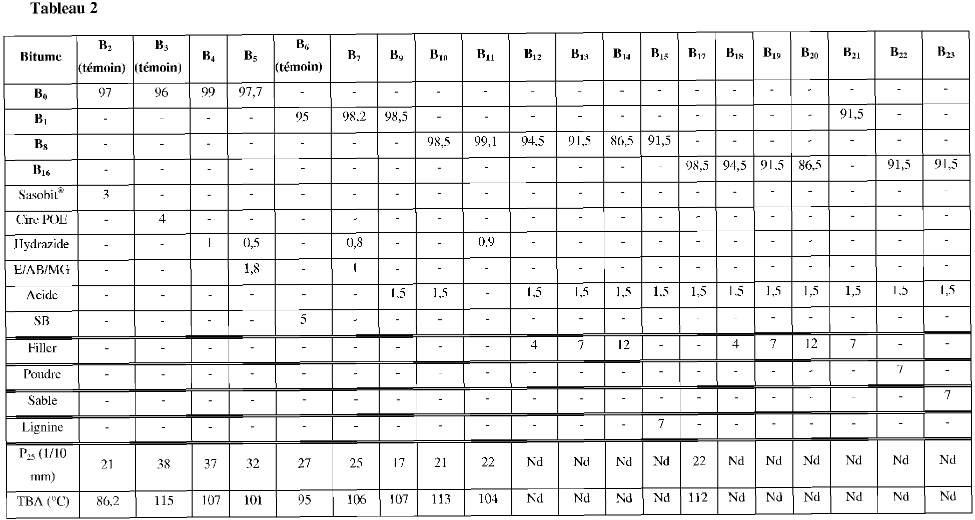

Les valeurs de P₂₅ (1/10 mm) et TBA (°C) indiquées Nd, n'ont pas été mesurées à cause de la présence de filler, sable ou poudre dans la composition bitumineuse selon l'invention.

Les bitumes sont préparés de la manière suivante.

Pour le bitume **B₂**, on introduit la base bitume **B₀** dans un réacteur maintenu à 165°C sous agitation à 300 tours/min. On introduit ensuite dans le réacteur la cire Fischer-Tropsch. Le contenu du réacteur est maintenu à 165°C sous agitation à 300 tours/min pendant 1 heure.

Le bitume **B₃** est préparé à partir de la base bitume **B₀** et de la cire POE de la même manière que le bitume **B₂.**

Pour le bitume **B₄,** on introduit d'abord la base bitume **B₀** dans un réacteur à 160°C sous agitation à 300 tours/min. Ensuite, on ajoute l'hydrazide respectivement sous forme de granulés. Le mélange est agité pendant environ 1 heure à 160°C pour obtenir un aspect final homogène. Le mélange est refroidi à température ambiante.

Pour le bitume **B₅** selon l'invention, on introduit d'abord la base bitume **B₀** dans un réacteur à 160°C sous agitation à 300 tours/min. Ensuite, on ajoute le terpolymère E/AB/MG et le mélange est chauffé à 160°C pendant environ 2 heures. Puis l'hydrazide est ajouté sous forme de granulés et le mélange est agité pendant environ 1 heure à 160°C pour obtenir un aspect final homogène. Le mélange est refroidi à température ambiante.

Pour le bitume **B₆**, on introduit dans un réacteur maintenu à 185°C et sous agitation à 300 tours/min, la base bitume **B₁** et le copolymère SB. Le contenu du réacteur est ensuite maintenu à 185°C sous agitation à 300 tours/min pendant 4 heures.

Le bitume **B₇** est préparé à partir de la base bitume **B₁** de la même manière que le bitume **B₅.**

Le bitume **B₉** est préparé à partir de la base **B₁** de la même manière que le bitume **B₄** en utilisant de l'acide à la place de l'hydrazide.

Pour le bitume **B₁₀**, on introduit la base bitume **B₈** dans un réacteur à 160°C sous agitation à 300 tours/min, puis on ajoute l'acide. Le mélange est agité pendant environ 1 heure à 160°C pour obtenir un aspect final homogène. Le mélange est refroidi à température ambiante.

Le bitume **B₁₁** est préparé comme le bitume **B₁₀** en utilisant de l'hydrazide à la place de l'acide.

Pour le bitume **B₁₂**, on introduit la base bitume **B₈** dans un réacteur maintenu à 160°C sous agitation à 300 tours/min, puis on ajoute l'acide. Le mélange est agité pendant environ 1 heure à 160°C puis on ajoute 4% de filler, préalablement chauffé à 160°C pendant 30 minutes. Le mélange ainsi obtenu est chauffé à 160°C pendant environ 1 heure pour obtenir un aspect final homogène. Le mélange est refroidi à température ambiante.

Le bitume **B₁₃** est préparé comme le bitume **B₁₂** en utilisant 7% de filler au lieu de 4% de filler.

Le bitume **B₁₄** est préparé comme le bitume **B₁₂** en utilisant 12% de filler au lieu de 4% de filler.

Le bitume **B₁₅** est préparé comme le bitume **B₁₂** en utilisant 7% de lignine au lieu de 4% de filler.

Le bitume **B₁₇** est préparé à partir de la base bitume **B₁₆** de la même manière que le bitume **B₉.**

Pour le bitume **B₁₈**, on introduit d'abord la base bitume **B₁₆** dans un réacteur à 160°C sous agitation à 300 tours/min. Ensuite, on ajoute l'acide. Le mélange est agité pendant environ 1 heure à 160°C puis on ajoute 4% de filler, préalablement chauffé à 160°C pendant 30 minutes. Le mélange ainsi obtenu est chauffé à 160°C pendant environ 1 heure pour obtenir un aspect final homogène. Le mélange est refroidi à température ambiante.

Le bitume **B₁₉** est préparé comme le bitume **B₁₈** en utilisant 7% de filler au lieu de 4% de filler.

Le bitume **B₂₀** est préparé comme le bitume **B₁₈** en utilisant 12% de filler au lieu de 4% de filler.

Le bitume **B₂₁** est préparé à partir de la base bitume **B₁** de la même manière que le bitume **B₁₃.**

Le bitume **B₂₂** est préparé à partir de la base bitume **B₁₆** de la même manière que le bitume **B₁₃** en utilisant de la poudre à la place du filler.

Le bitume **B₂₃** est préparé à partir de la base bitume **B₁₆** de la même manière que le bitume **B₁₃** en utilisant du sable à la place du filler.

### 2. Préparation des granules G₀ à G₂₉

### Méthodes générales pour la préparation des granules selon l'invention

### a. Méthode générale dite à la seringue

Le bitume est d'abord chauffé à une température de chauffage notée **T_{c}**, initialement de 150°C, puis prélevé à chaud à l'aide d'une seringue. Des gouttes de bitume sont ensuite déposées sur un support recouvert d'anti-agglomérant. Si la mise en forme des granules est difficile à cette température initiale de 150°C, le bitume est alors chauffé à une température supérieure avec une incrémentation de 10°C jusqu'à ce que cette mise en forme soit possible. On laisse ensuite refroidir les gouttes de bitume à température ambiante pendant 10 à 15 minutes. Les gouttes de bitume sont ensuite recouvertes d'anti-agglomérant puis passées au tamis afin d'enlever l'excédent d'antigglomérant. On obtient ainsi des granules de bitume.

Les granules **Go** à **G₇** sont préparées à partir des bitumes **B₀** à **B₇** respectivement selon la méthode a. décrite ci-dessus en utilisant comme anti-agglomérant du talc.

Les granules **G₈** sont préparés à partir du bitume **B₇** selon la méthode a. décrite ci-dessus en en utilisant comme anti-agglomérant des fines siliceuses.

Les températures de chauffage **T_{c}** des bitumes **B₀** à **B₇** pour les granules **G₀** à **G₈** sont répertoriées dans le tableau 3 ci-dessous.

**Tableau 3**

| **Bitume** | **Bo (témoin)** | **B₁ (témoin)** | **B₂ (témoin)** | **B₃ (témoin)** | **B₄** | **Bs** | **B₆ (témoin)** | **B₇** |
|---|---|---|---|---|---|---|---|---|
| **T_{c}** (°C) | 160 | 160 | 180 | 180 | 150 | 180 | 190 | 180 |

La température de chauffage **T_{c}** des bitumes **B₀** à **B₇** des granules dépend de la composition du bitume utilisée. La température de chauffage des bitumes **B₄**, **B₅**, et **B₇** est inférieure à celle des bases bitumes **B₀** et **B₁** et du bitume **B₆** comprenant le copolymère SB. Les bitumes **B₄**, **B₅** et **B₇** sont facilement mis sous forme de granules comparativement aux bitumes de l'art antérieur.

### b.Méthode générale dite de moulage

Le bitume est réchauffé à 160°C pendant deux heures à l'étuve avant d'être coulée dans un moule en silicone présentant différents trous de forme sphérique de façon à former les granules de bitume solide. Après avoir constaté la solidification du bitume dans le moule, le surplus est arasé avec une lame chauffée au bec bunsen. Après 30 minutes, le bitume solide sous forme de granules non enrobées est démoulé et stocké dans un plateau recouvert de papier siliconé. On laisse ensuite refroidir les granules de bitume à température ambiante pendant 10 à 15 minutes. Les granules ainsi formées sont recouvertes à leur surface d'un anti-agglomérant, optionnellement préalablement chauffé à une température comprise entre 30°C et 70°C pendant 30 minutes, puis passées au tamis afin d'enlever l'excédent d'anti-agglomérant.

Les granules **G₉** et **G₁₀** sont préparées à partir du bitume **B₉** selon la méthode b. décrite ci-dessus en utilisant respectivement comme anti-agglomérant de la lignine préalablement chauffée à 70°C pendant 30 min et de la poudre d'aiguilles de pin préalablement chauffée à 70°C pendant 30 min.

Les granules non enrobées **Gₙ** sont préparées à partir du bitume **B₈** selon la méthode b. décrite ci-dessus.

Les granules **G₁₂**, **G₁₃ et G₁₄** sont préparées à partir du bitume **B₁₀** selon la méthode b. décrite ci-dessus en utilisant respectivement comme anti-agglomérant des fines siliceuses, de la lignine préalablement chauffée à 70°C pendant 30 min et de la poudre d'aiguilles de pin préalablement chauffée à 70°C pendant 30 min.

Les granules **G₁₅** sont préparées à partir des bitumes **B₁₁** selon la méthode b. décrite ci-dessus en utilisant comme anti-agglomérant de la poudre d'aiguilles de pin préalablement chauffée à 70°C pendant 30 min.

Les granules **G₁₆**, **G₁₇ et G₁₈** sont respectivement préparées à partir des bitumes **B₁₂**, **B₁₃** et **B₁₄** selon la méthode b. décrite ci-dessus en utilisant comme anti-agglomérant des fines siliceuses.

Les granules **G₁₉** et **G₂₀** sont préparées à partir du bitume **B₁₅** selon la méthode b. décrite ci-dessus en utilisant respectivement comme anti-agglomérant de la lignine préalablement chauffée à 70°C pendant 30 min et des fines siliceuses.

Les granules **G₂₁, G₂₂, G₂₃ et G₂₄** sont préparées respectivement à partir du bitume **B₁₇, B₁₈, B₁₉** et **B₂₀** selon la méthode b. décrite ci-dessus en utilisant comme anti-agglomérant des fines siliceuses.

Les granules **G₂₅** sont préparées à partir du bitume **B₂₁** selon la méthode b. décrite ci-dessus en utilisant comme anti-agglomérant des fines siliceuses.

Les granules **G₂₆** sont préparées à partir du bitume **B₁₇** selon la méthode b. décrite ci-dessus en utilisant comme anti-agglomérant de la poudre de verre.

Les granules **G₂₇** sont préparées à partir du bitume **B₂₂** selon la méthode b. décrite ci-dessus en utilisant comme anti-agglomérant de la poudre de verre.

Les granules **G₂₈** sont préparées à partir du bitume **B₂₃** selon la méthode b. décrite ci-dessus en utilisant respectivement comme anti-agglomérant du sable de fontainebleau.

Les granules **G₂₉** sont préparées à partir du bitume **B₂₂** selon la méthode b. décrite ci-dessus en utilisant respectivement comme anti-agglomérant du sable de fontainebleau.

Le pourcentage massique de l'enrobage pour toutes les granules **G₀** à **G₁₀** et **G₁₂** à **G₂₉** est d'environ 1% en masse par rapport à la masse totale du bitume des granules.

### 3. Essai de résistance à la charge des granules G₀ à G₂₉

Cet essai est mis en œuvre afin d'évaluer la résistance à la charge des granules **G₀** à **G₂₉** à une température de 50°C sous un effort en compression. En effet, cet essai permet de simuler les conditions de température et de compression des granules les uns sur les autres auxquelles ils sont soumis lors du transport et/ou du stockage en vrac dans des sacs de 10 à 30 kg ou dans des Big Bag de 500 à 1000 kg ou dans des fûts de 200 kg et d'évaluer leur résistance dans ces conditions.

L'essai de résistance à la charge est réalisé à l'aide d'un analyseur de texture commercialisé sous le nom LF Plus par la société LLOYD Instruments et équipé d'une enceinte thermique. Pour ce faire, un récipient métallique de diamètre 25 mm contenant une masse de 10 g de granules de bitume est placé à l'intérieur de l'enceinte thermique réglée à une température de 50°C pendant 3 heures. Le piston de l'analyseur de texture est un cylindre de diamètre 20 mm et de hauteur 60 mm. Le piston cylindrique est au départ placé au contact de la couche supérieure des granules. Ensuite, il se déplace verticalement vers le bas, à une vitesse constante de 0,1 mm/min sur une distance calibrée de 1 mm de manière à exercer une force de compression sur l'ensemble des granules placés dans le récipient. Après retrait du piston, on évalue visuellement la tenue à la compression des granules, notamment leur apparence et leur aptitude à s'agglomérer. Les observations sont répertoriées dans le tableau 4 ci-dessus.

Pour les granules **G₁₇** et **G₁₈**, un essai de résistance au fluage supplémentaire est réalisé dans les mêmes conditions que l'essai de résistance à la charge tel que décrit ci-dessus à l'exception que ce test est réalisé à 60°C au lieu de 50°C.

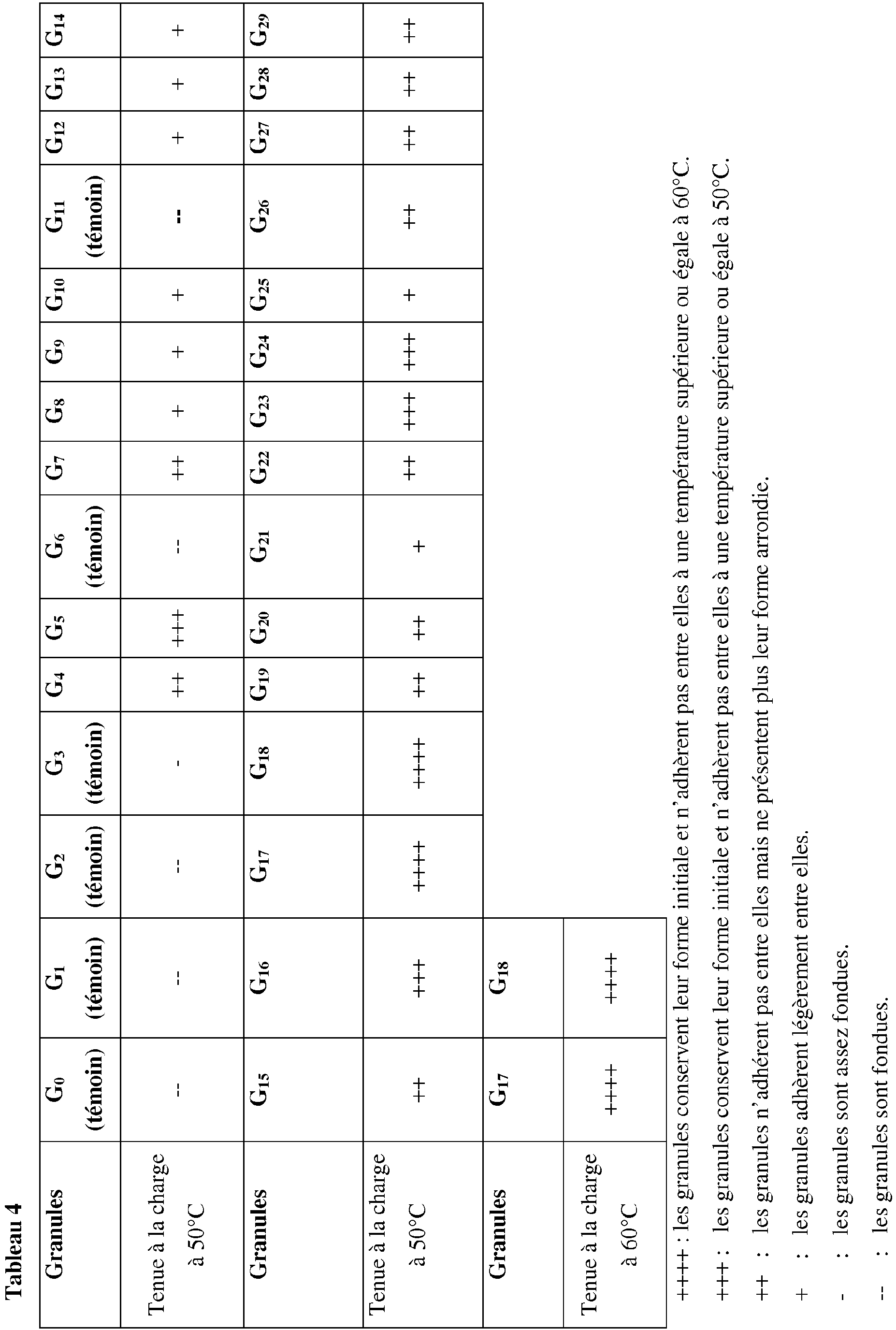

Les granules **G₅** et **G₇** comprenant la combinaison de l'hydrazide et du terpolymère E/AB/MG et recouvertes de talc présentent une très bonne résistance à la charge à 50°C dans la mesure où elles gardent leur forme initiale tout comme les granules **G₁₆**, **G₁₇**, **G₁₈**, **G₂₃** et **G₂₄.**

De plus, les granules **G₄**, **G₅**, **G₇**, **G₈** à **G₁₀** et **G₁₂** à **G₂₉** résistent bien aux conditions de compression et de température comparativement aux granules témoins **G₀**, **G₁**, **G₂, G₃**, **G₆** et **G₁₁** qui s'agglomèrent ou fondent lors de leur transport ou de leur stockage, notamment à des températures supérieures ou égales à 50°C. Ainsi, la manipulation desdites granules **G₀**, **G₁**, **G₂, G₃**, **G₆** et **G₁₁** est moins aisée comparativement aux granules **G₄**, **G₅**, **G₇**, **G₈** à **G₁₀** et **G₁₂** à **G₂₉**. Avantageusement, les granules **G₁₇** et **G₁₈** présentent une excellente résistance à la charge à 60°C dans la mesure où elles gardent leur forme initiale contrairement aux granules **G₁₁** qui fondent lors de l'essai de résistance à la charge à 50°C.

En particulier, si les granules de bitume sont transportées dans des sacs ou Big Bag, les granules **G₀**, **G₁**, **G₂, G₃**, **G₆** et **G₁₁** agglomérées et/ou fondues risquent de fuir hors des sacs ou Big Bag, rendant difficile la manipulation desdits sacs ou Big Bag qui auront tendance à coller entre eux.

## Revendications

1. Granules de bitume comprenant au moins une base bitume ayant une pénétrabilité, mesurée à 25°C selon la norme EN 1426, comprise entre 5 et 300 1/10 mm, et de 0,1% à 5% en masse par rapport à la masse totale desdites granules d'au moins un additif chimique choisi parmi :
• un composé de formule générale : HOOC-C_{w}H_{2w}-COOH dans laquelle w est un entier variant de 4 à 22, et
• un composé de formule générale (**II**) : R-CONH-NHCO-R' dans laquelle:
R et R', identiques ou différents, contiennent une chaîne hydrocarbonée, saturée ou insaturée, linéaire ou ramifiée, cyclique ou acyclique, ayant de 1 à 22 atomes de carbone et comprenant éventuellement des hétéroatomes et/ou des cycles ayant de 3 à 12 atomes et/ou des hétérocycles ayant de 3 à 12 atomes.

2. Granules de bitume selon la revendication 1, dans lesquelles l'additif chimique est un diacide de formule générale HOOC-C_{w}H_{2w}-COOH dans laquelle w est un entier variant de 4 à 22, de préférence de 4 à 12, préférentiellement choisi parmi le groupe constitué par l'acide adipique, l'acide pimélique, l'acide subérique, l'acide azélaique, l'acide sébacique, l'acide undécanedioïque, l'acide 1,12-dodécanedioïque et l'acide tétradécanedioïque.

3. Granules de bitume selon la revendication 1, dans lesquelles l'additif chimique est un composé de formule générale (**II**) et lesdits groupements R et/ou R', identiques ou différents, comprennent un ou plusieurs cycles ou hétérocycles mono- ou polycycliques aromatiques éventuellement substitués par une ou plusieurs fonctions hydroxyle et/ou une ou plusieurs chaînes hydrocarbonées saturées, linéaires ou ramifiées, ayant de 1 à 6 atomes de carbone.

4. Granules de bitume selon la revendication 3, dans lesquelles l'additif chimique est le 2',3-bis[[3-[3,5-di-tert-butyl-4-hydroxyphenyl]propionyl]] propionohydrazide .

5. Granules de bitume selon l'une quelconque des revendications 1 à 4, lesdites granules comprenant de 0,5% à 4% en masse, plus préférentiellement de 0,5% à 2,5% en masse dudit additif chimique par rapport à la masse totale desdites granules.

6. Granules de bitume selon l'une quelconque des revendications 1 à 5, lesdites granules comprenant au moins un adjuvant polymère oléfinique fonctionnalisé par au moins des groupements fonctionnels glycidyle, préférentiellement choisi dans le groupe consistant en :
(a) les copolymères, statistiques ou séquencés, d'éthylène et d'un monomère choisi parmi l'acrylate de glycidyle et le méthacrylate de glycidyle, comprenant de 50% à 99,7% en masse d'éthylène ;
(b) les ter terpolymères, statistiques ou séquencés, d'éthylène, d'un monomère A choisi parmi l'acétate de vinyle et les acrylates ou méthacrylates d'alkyle en C1 à C6 et d'un monomère B choisi parmi l'acrylate de glycidyle et le méthacrylate de glycidyle, comprenant de 0,5% à 40% en masse de motifs issus du monomère A et, de 0,5% à 15% en masse de motifs issus du monomère B, le reste étant formé de motifs issus de l'éthylène ;
(c) les copolymères résultant du greffage d'un monomère B choisi parmi l'acrylate de glycidyle et le méthacrylate de glycidyle, sur un substrat consistant en un polymère choisi parmi les polyéthylènes, les polypropylènes, les copolymères statistiques ou séquencés d'éthylène et d'acétate de vinyle et les copolymère statistiques ou séquencés d'éthylène et d'acrylate ou méthacrylate d'alkyle en C1 à C6, comprenant de 40% à 99,7% en masse d'éthylène, lesdits copolymères greffés comprenant de 0,5% à 15% en masse de motifs greffés issus du monomère B.

7. Granules de bitume selon la revendication 6, lesdites granules comprenant de 0,05% à 15% en masse, de préférence de 0,1% à 10% en masse, plus préférentiellement de 0,5% à 5% en masse de l'adjuvant polymère oléfinique par rapport à la masse totale desdites granules.

8. Granules de bitume selon l'une quelconque des revendications 1 à 7, lesdites granules comprenant en outre au moins un anti-agglomérant.

9. Granules de bitume selon l'une quelconque des revendications 1 à 8, lesdites granules étant recouvertes sur au moins une partie de leur surface d'un anti-agglomérant.

10. Granules de bitume selon l'une quelconque des revendications 8 et 9, dans lesquelles l'anti-agglomérant est choisi parmi le talc ; les fines généralement de diamètre inférieur à 125 µm à l'exception des fines calcaires, telles que les fines siliceuses ; le sable tel que le sable de fontainebleau ; le ciment ; le carbone ; les résidus du bois tels que la lignine, la lignosulfonate, les poudres d'aiguilles de conifères, les poudres de cônes de conifères, notamment de pin ; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les oxydes de silicium ; la poudre de matière plastique ; la chaux ; le plâtre ; la poudre de caoutchouc ; la poudre de polymères tels que les copolymères styrène-butadiène (SB), les copolymères styrène-butadiène-styrène (SBS) ; et leurs mélanges.

11. Procédé de transport et/ou de stockage de bitume routier à froid, ledit procédé comprenant la mise en forme à partir du bitume routier, de granules de bitume selon l'une quelconque des revendications 1 à 10, puis le transport et/ou le stockage des granules de bitume.

12. Utilisation de granules de bitume selon l'une quelconque des revendications 1 à 10 comme liant routier, de préférence pour la fabrication d'enrobés.

13. Procédé de fabrication d'enrobés comprenant au moins un liant routier et des granulats, le liant routier étant choisi parmi les granules de bitume selon l'une quelconque des revendications 1 à 10, ce procédé comprenant au moins les étapes de :
- chauffage des granulats à une température allant de 100°C à 180°C, de préférence de 120°C à 160°C,
- mélange des granulats avec le liant routier dans une cuve telle qu'un malaxeur ou un tambour malaxeur,
- obtention d'enrobés.

14. Procédé selon la revendication 13, qui ne comporte pas d'étape de chauffage du liant routier avant son mélange avec les granulats.

## Patentansprüche

1. Bitumengranulat, das mindestens eine Bitumenbasis, die eine bei 25°C nach der Norm EN 1426 bestimmte Penetration zwischen 5 und 300 1/10 mm aufweist, und bezogen auf die Gesamtmasse des Granulats 0,1 Gewichts-% bis 5 Gewichts-% von mindestens einem chemischen Additiv umfasst, das ausgewählt ist aus:
• einer Verbindung mit der allgemeinen Formel: HOOC-C_{w}H_{2w}-COOH, in der w eine ganze Zahl zwischen 4 und 22 ist, und
• einer Verbindung mit der allgemeinen Formel (II): R-CONH-NHCO-R', in der:
R und R', identisch oder verschieden, eine gesättigte oder ungesättigte, unverzweigte oder verzweigte, zyklische oder nicht-zyklische Kohlenwasserstoffkette mit 1 bis 22 Kohlenstoffatomen enthalten, die gegebenenfalls Heteroatome und/oder Ringe mit 3 bis 12 Atomen und/oder Heterozyklen mit 3 bis 12 Atomen umfasst.

2. Bitumengranulat nach Anspruch 1, wobei das chemische Additiv eine zweiwertige Säure mit der allgemeinen Formel HOOC-C_{w}H_{2w}-COOH ist, in der w eine ganze Zahl zwischen 4 und 22, bevorzugt 4 und 12 ist, die vorzugsweise aus der Gruppe ausgewählt ist, die aus Adipinsäure, Pimelinsäure, Suberinsäure, Azelainsäure, Sebacinsäure, Undecandisäure, 1,12-Dodecandisäure und Tetradecandisäure besteht.

3. Bitumengranulat nach Anspruch 1, wobei das chemische Additiv eine Verbindung mit der allgemeinen Formel (II) ist und die Gruppen R und/oder R', identisch oder verschieden, einen oder mehrere aromatische monozyklische oder polyzyklische zyklische oder heterozyklische Verbindungen, gegebenenfalls substituiert mit einer oder mehreren Hydroxygruppen und/oder einer oder mehreren unverzweigten oder verzweigten gesättigten Kohlenwasserstoffen mit 1 bis 6 Kohlenstoffatomen umfassen.

4. Bitumengranulat nach Anspruch 3, wobei das chemische Additiv 2',3-bis[[3-[3,5-di-tert-butyl-4-Hydroxyphenyl]propionyl]]propionohydrazid ist.

5. Bitumengranulat nach einem der Ansprüche 1 bis 4, wobei das Granulat bezogen auf die Gesamtmasse des Granulats 0,5 Gewichts-% bis 4 Gewichts-%, bevorzugter 0,5 Gewichts-% bis 2,5 Gewichts-% des chemischen Additivs umfasst.

6. Bitumengranulat nach einem der Ansprüche 1 bis 5, wobei das Granulat mindestens ein Olefinpolymer als Hilfsmittel umfasst, das zumindest mit funktionellen Glycidylgruppen funktionalisiert und vorzugsweise aus der Gruppe ausgewählt ist, die aus Folgendem besteht:
(a) statistischen Copolymeren oder Blockcopolymeren aus Ethylen und einem Monomer, das aus Glycidylacrylat und Glycidylmethacrylat ausgewählt ist und 50 Gewichts-% bis 99,7 Gewichts-% Ethylen umfasst;
(b) statistischen Terpolymeren oder Block-Terpolymeren aus Ethylen, einem Monomer A, das aus Vinylacetat und C₁-bis C₆-Alkylacrylaten oder -methacrylaten ausgewählt ist, und einem Monomer B, das aus Glycidylacrylat und Glycidylmethacrylat ausgewählt ist, die 0,5 Gewichts-% bis 40 Gewichts-% Einheiten aus Monomer A und 0,5 Gewichts-% bis 15 Gewichts-% Einheiten aus Monomer B umfassen, wobei der Rest aus Einheiten aus Ethylen gebildet ist;
(c) Copolymeren, die durch Aufpfropfen von einem Monomer B, das aus Glycidylacrylat und Glycidylmethacrylat ausgewählt ist, auf ein Substrat erhalten wird, das aus einem Polymer besteht, das ausgewählt ist aus Polyethylenen, Polypropylenen, statistischen Copolymeren oder Blockcopolymeren aus Ethylen und Vinylacetat und statistischen Copolymeren oder Blockcopolymeren aus Ethylen und C₁-bis C₆-Alkylacrylaten oder - methacrylaten, die 40 Gewichts-% bis 99,7 Gewichts-% Ethylen umfassen, wobei die aufgepfropften Copolymere 0,5 Gewichts-% bis 15 Gewichts-% gepfropfte Einheiten aus Monomer B umfassen.

7. Bitumengranulat nach Anspruch 6, wobei das Granulat bezogen auf die Gesamtmasse des Granulats 0,05 Gewichts-% bis 15 Gewichts-%, vorzugsweise 0,1 Gewichts-% bis 10 Gewichts-%, bevorzugter 0,5 Gewichts-% bis 5 Gewichts-% des Olefinpolymers als Hilfsstoff umfasst.

8. Bitumengranulat nach einem der Ansprüche 1 bis 7, wobei das Granulat ferner mindestens ein Trennmittel umfasst.

9. Bitumengranulat nach einem der Ansprüche 1 bis 8, wobei das Granulat auf mindestens einem Teil der Oberfläche mit einem Trennmittel bedeckt ist.

10. Bitumengranulat nach Anspruch 8 oder 9, wobei das Trennmittel ausgewählt ist aus Talkum; Feinstoffen mit einem Durchmesser im Allgemeinen unter 125 µm mit Ausnahme von kalkhaltigen Feinstoffen, beispielsweise siliziumhaltigen Feinstoffen; Sand wie Sand von Fontainebleau; Zement; Kohlenstoff; Holzrückständen wie Lignin, Lignosulfonat, Pulvern aus Nadelholznadeln, Pulvern aus Nadelholzzapfen, insbesondere von Kiefer; Glaspulver; Tonen wie Kaolin, Bentonit, Blähglimmer; Aluminiumoxid wie Aluminiumoxidhydraten; Siliziumdioxid; Siliziumderivaten wie Silikaten, Siliziumhydroxiden und Siliziumoxiden; Kunststoffpulver; Kalk; Gips; Kautschukpulver; Polymerpulver wie Styrol-Butadien-Copolymeren (SB), Styrol-Butadien-Styrol-Copolymeren (SBS) und ihren Mischungen.

11. Verfahren zum Transportieren und/oder Lagern von Straßenbitumen im kalten Zustand, wobei das Verfahren das Formen von Bitumengranulat nach einem der Ansprüche 1 bis 10 aus Straßenbitumen und anschließend das Transportieren und/oder Lagern des Bitumengranulats umfasst.

12. Verwendung von Bitumengranulat nach einem der Ansprüche 1 bis 10 als Bindemittel im Straßenbau, vorzugsweise zur Herstellung von Mischgut.

13. Verfahren zur Herstellung von Mischgut, das mindestens ein Bindemittel für den Straßenbau und Zuschlagstoffe umfasst, wobei das Bindemittel für den Straßenbau aus Bitumengranulat nach einem der Ansprüche 1 bis 10 ausgewählt ist, wobei dieses Verfahren zumindest folgende Schritte umfasst:
- Erwärmen der Zuschlagstoffe auf eine Temperatur zwischen 100°C und 180°C, vorzugsweise zwischen 120°C und 160°C,
- Mischen der Zuschlagstoffe mit dem Bindemittel für den Straßenbau in einem Behälter wie einem Mischer oder einer Mischtrommel,
- Erhalten von Mischgut.

14. Verfahren nach Anspruch 13, das keinen Schritt zum Erwärmen des Bindemittels für den Straßenbau vor dem Mischen mit den Zuschlagstoffen umfasst.

## Claims

1. Bitumen pellets comprising at least one bitumen base having a penetrability measured at 25°C according to norm EN1426 comprised between 5 and 300 1/10 mm, and from 0.1% to 5% by weight, relative to the total weight of said pellets, of at least one chemical additive chosen from:
• a compound of general formula (I): HOOC-C_{w}H_{2w}-COOH, in which w is an integer ranging from 4 to 22, and
• a compound of general formula (II): R-CONH-NHCO-R' in which:
R and R', which are identical or different, contain a saturated or unsaturated, linear or branched, cyclic or acyclic hydrocarbon-based chain having from 1 to 22 carbon atoms and optionally comprising heteroatoms and/or rings having from 3 to 12 atoms and/or heterocycles having from 3 to 12 atoms.

2. Bitumen pellets according to Claim 1, in which the chemical additive is a diacid of general formula HOOC-C_{w}H_{2w}-COOH, in which w is an integer ranging from 4 to 22, preferably from 4 to 12, preferably chosen from the group consisting of adipic acid, pimelic acid, suberic acid, azelaic acid, sebacic acid, undecanedioic acid, 1,12-dodecanedioic acid and tetradecanedioic acid.

3. Bitumen pellets according to Claim 1, in which the chemical additive is a compound of general formula (II) and said groups R and/or R', identical or different, comprise one or more aromatic monocyclic or polycyclic rings or heterocycles, optionally substituted by one or more hydroxyl functions and/or one or more saturated, linear or branched hydrocarbon-based chains, having from 1 to 6 carbon atoms.

4. Bitumen pellets according to Claim 3, in which the chemical additive is 2',3-bis[[3-[3,5-di-tert-butyl-4-hydroxyphenyl]propionyl]]propionohydrazide.

5. Bitumen pellets according to any one of Claims 1 to 4, said pellets comprising from 0.5% to 4% by weight, more preferentially from 0.5% to 2.5% by weight of said chemical additive relative to the total weight of said pellets.

6. Bitumen pellets according to any one of Claims 1 to 5, said pellets comprising at least one olefinic polymer adjuvant, functionalized by at least glycidyl functional groups, preferably chosen from the group consisting of:
(a) random or block copolymers of ethylene and of a monomer chosen from glycidyl acrylate and glycidyl methacrylate, comprising from 50% to 99.7% by weight of ethylene;
(b) random or block terpolymers of ethylene, of a monomer A chosen from vinyl acetate and C₁ to C₆ alkyl acrylates or methacrylates and of a monomer B chosen from glycidyl acrylate and glycidyl methacrylate, comprising from 0.5% to 40% by weight of units derived from the monomer A and from 0.5% to 15% by weight of units derived from the monomer B, the remainder being formed of units derived from the ethylene; and
(c) copolymers resulting from the grafting of a monomer B, chosen from glycidyl acrylate and glycidyl methacrylate, to a substrate consisting of a polymer chosen from polyethylenes, polypropylenes, random or block copolymers of ethylene and of vinyl acetate and random or block copolymers of ethylene and of C₁ to C₆ alkyl acrylate or methacrylate, comprising from 40% to 99.7% by weight of ethylene, said grafted copolymers comprising from 0.5% to 15% by weight of grafted units derived from the monomer B.

7. Bitumen pellets according to Claim 6, said pellets comprising from 0.05% to 15% by weight, preferably from 0.1% to 10% by weight, more preferentially from 0.5% to 5% by weight of the olefinic polymer adjuvant relative to the total weight of said pellets.

8. Bitumen pellets according to any one of Claims 1 to 7, said pellets also comprising at least one anti-agglomerating agent.

9. Bitumen pellets according to any one of Claims 1 to 8, said pellets being covered over at least a portion of their surface with an anti-agglomerating agent.

10. Bitumen pellets according to any one of Claims 8 and 9, in which the anti-agglomerating agent is chosen from talc; fines generally with a diameter of less than 125 µm with the exception of calcium carbonate fines, such as siliceous fines; sand, such as Fontainebleau sand; cement; carbon; wood residues such as lignin, lignosulphonate, conifer needle powders and conifer cone powders, especially of pine; glass powder; clays such as kaolin, bentonite, vermiculite; alumina such as alumina hydrates; silica; silica derivatives such as silicates, silicon hydroxides and silicon oxides; plastic powder; lime; plaster; rubber powder; powder of polymers such as styrene-butadiene copolymers (SB), styrene-butadiene-styrene copolymers (SBS); and mixtures thereof.

11. Process for transporting and/or storing road bitumen under cold conditions, said process comprising shaping road bitumen in the form of bitumen pellets according to any one of claims 1 to 10, and then transporting and/or storing the bitumen pellets.

12. Use of bitumen pellets according to any one of Claims 1 to 10 as road binder, preferably for manufacturing mixes.

13. Process for manufacturing mixes comprising at least one road binder and aggregates, the road binder being chosen from the bitumen pellets according to any one of Claims 1 to 10, this process comprising at least the steps of:
- heating the aggregates to a temperature ranging from 100°C to 180°C, preferably from 120°C to 160°C,
- mixing the aggregates with the road binder in a tank such as a mixer or a mixing drum,
- obtaining mixes.

14. Process according to Claim 13, which does not comprise a step of heating the road binder before it is mixed with the aggregates.
